# EUROPEAN PATENT SPECIFICATION

(11) **EP 1 391 440 B1**
(45) Date of publication and mention of the grant of the patent: **17.10.2007**
(21) Application number: 03018530.0
(22) Date of filing: 16.08.2003
(51) Int. Cl.: C04B 28/26, C04B 24/04, C08G 18/38, C09K 17/46

(54) **Chemical grout composition for stabilization when digging tunnels and construction method for increasing stability using same**
Mörtelzusammensetzung zur Stabilisierung während des Grabens von Tunneln und Konstruktionsverfahren mit erhöhter Stabilität unter Verwendung derselben
Composition de coulis pour stabiliser les tunnels pendant leur creusement et son utilisation pour augmenter la stabilité dans des methodes de construction

(30) Priority: 22.08.2002 JP 2002241707
(43) Date of publication of application: 25.02.2004
(73) Proprietor: DAI-ICHI KOGYO SEIYAKU CO., LTD., Shimogyo-ku, Kyoto-shi, Kyoto-fu (JP)
(72) Inventor: Yamada, Tohru, Momoyama cho ,Fushimi-ku Kyoto-shi Kyoto (JP); Samezawa, Hiroshi, Ohtsu-shi, Shiga-ken (JP)
(74) Representative: Diehl & Partner

(56) References cited:
- AU-B- 648 152
- DE-A- 3 538 791
- GB-A- 1 476 799
- US-A- 4 325 658
- DATABASE WPI Week 200241 Derwent Publications Ltd., London, GB; AN 2002-376733 XP002265583 & JP 2002 047490 A (NIPPON POLYURETHANE KKK)
- DATABASE WPI Week 199247 Derwent Publications Ltd., London, GB; AN 1992-385356 XP002265584 & JP 04 283290 A (DAIICHI KOGYO SEIYAKU CO)

## Description

The present invention relates to a chemical grout composition for stabilization, used with the purpose of consolidating and stabilizing rock bed having a crushed zone or unstable and soft foundation or stopping water or filling airspace of rock bed or ground with water leakage or spring water, when digging tunnels. The present invention also relates to a construction method for increasing stability.

As a construction method for increasing stability of unstable rock bed and ground when digging tunnels, there is the method of injecting a chemical grout composition having polyisocyanate and a sodium silicate aqueous solution as the main component. Polyisocyanate and sodium silicate are excellent in reactivity and a chemical grout composition having these as the main component has high consolidating properties. However, polyisocyanate is not sufficient in permeability to rock bed and ground, as viscosity of polyisocyanate is relatively high and a diluent is used in order to improve fluidity and permeability.

Conventionally, organic solvents such as ethyl acetate, toluene, xylene, 1,1,1-trichloroethane, methylene chloride and trifluorochloromethane have been used as the diluent. However, these organic solvents are high in volatility and discharged after consolidation, harming the environment.

As a means to solve the above problem, Japanese Patent No. 2591540 discloses a method of using a reactive diluent which can be hydrolyzed by a sodium silicate aqueous solution, such as ethylene glycol diacetate or triethylene glycol dimethyl ether. According to this method, by adding a reactive diluent to polyisocyanate, the viscosity of polyisocyanate can be adjusted and the compatibility of the sodium silicate aqueous solution and polyisocyanate can be improved. Furthermore, by hydrolysis of the reactive diluent, a complex reaction consolidated structural body is obtained and the properties of the consolidated body are improved.

However, diluents such as ethylene glycol diacetate and triethylene glycol dimethylether have a relatively low flash point, lowering the flash point of polyisocyanate when added to polyisocyanate. As a result, handling must be conducted with care, in view of operational safety and primary storage, and preservation quantity is restricted.

JP 2002 047490 A discloses an injection grout comprising water glass, polyisocyanate as well as a diluent comprising a monoester of an aliphatic monocarboxylic acid with a polyoxyalkylene alkylether.

The object of the present invention is to provide a chemical grout composition for stabilization when digging tunnels, which has high compatibility and high reactivity of a sodium silicate aqueous solution and polyisocyanate and improved properties as a consolidated body and can be handled safely in the working environment and in terms of transportation and storage quantity. Also, the present invention provides a construction method for increasing stability using the composition.

The present invention relates to a chemical grout composition for stabilization when digging a tunnel comprising (A) a sodium silicate aqueous solution and (B) a polyisocyanate composition comprising (B1) polyisocyanate and (B2) a diluent, wherein the diluent (B2) comprises diester obtained from dicarboxylic acid and polyether alcohol.

In the above chemical grout composition for stabilization, diluent (B2) preferably comprises diester obtained from aliphatic dicarboxylic acid and polyoxyalkylene alkyl ether alcohol.

In the above chemical grout composition for stabilization, diluent (B2) preferably comprises diester, obtained from aliphatic dicarboxylic acid and polyoxyalkylene alkyl ether alcohol, and propylene carbonate.

In the above chemical grout composition for stabilization, the flash point of the polyisocyanate composition (B) is preferably at least 200°C.

In the above chemical grout composition for stabilization, the sodium silicate aqueous solution (A) preferably contains an amine catalyst.

In the above chemical grout composition for stabilization, the sodium silicate aqueous solution (A) preferably contains polyol.

In the above chemical grout composition for stabilization, the polyisocyanate (B1) preferably comprises a urethane prepolymer containing an isocyanate group (NCO) at the terminal obtained by reacting polyisocyanate and polyol.

In the above chemical grout composition for stabilization, the polyisocyanate composition (B) contains a silicone foam stabilizer.

Also, the present invention relates to a construction method for increasing stability when digging a tunnel in a mountain tunnel construction method, in which any one of the above chemical grout compositions is injected in rock bed or ground to consolidate, by urethane injection forepoling construction method and/or injection long distance pre-supporting construction method.

The chemical grout composition of the present invention comprises (A) a sodium silicate aqueous solution and (B) a polyisocyanate composition.

As the sodium silicate aqueous solution of component (A), a sodium silicate aqueous solution, which is usually commercially available, can be used as the main component. Sodium silicate is represented by the formula

Na₂O·xSiO₂·nH₂O.

Here, x represents the mole ratio of SiO₂ (silicon dioxide) and Na₂O (sodium oxide) and is preferably 0.5 to 4, more preferably 2 to 3.5. When x is less than 0.5, balance in reactivity tends to become poor, as the proportion of the gelation reaction of silicic acid anhydride in the foam curing reaction decreases. When the x is greater than 4, mixing properties with (B) and workability during use tend to decrease, as the viscosity of the sodium silicate aqueous solution becomes high.

The concentration of solid content within the aqueous solution is preferably adjusted to become 20 to 60 % by weight, more preferably 30 to 50 % by weight. When the concentration of solid content is less than 20 % by weight, flame retardancy tends to decrease, as inorganic components within the consolidated body decrease. When the concentration of solid content is more than 60 % by weight, mixing properties with (B) and workability during use tend to decrease, as the viscosity of component (A) becomes high.

The polyisocyanate composition of component (B) contains polyisocyanate (B1) and a diluent (B2).

Examples of the polyisocyanate (B1) are polyisocyanate such as diphenylmethane diisocyanate and a isomer thereof, polymethylene polyphenyl polyisocyanate (polymeric MDI), diphenylmethane diisocyanate modified with carbodiimide, trylene diisocyanate, crude trylene diisocyanate, xylylene diisocyanate, isophorone diisocyanate, naphthalene diisocyanate, hydrogenated diphenylmethane diisocyanate, trimethylene xylylene diisocyanate and a mixture thereof. Further examples include adducts obtained by modifying polyisocyanate with water, lower monoalcohol or polyol, urethane prepolymers containing a isocyanate group at the terminal obtained by reacting polyisocyanate with various polyols, mixtures thereof, adducts thereof, mixtures of prepolymers and one or at least two kinds of any of the above polyisocyanate and dimers or trimers obtained by adding a catalyst to the above polyisocyanate.

Also, a urethane prepolymer containing a isocyanate group at the terminal obtained by reacting the above polyisocyanate and monool or polyol described below by a known method so that the equivalent ratio of NCO groups and OH groups (NCO groups/OH groups) is within the range of 1.5 to 300, more preferably 2.0 to 100, may suitably be used as polyisocyanate (B1). When the equivalent ratio of NCO groups and OH groups is less than 1.5, workability during use tends to decrease as the viscosity of the solution becomes high and when the ratio is greater than 300, the effect of changing to a urethane prepolymer tends to decrease.

Polyether monool and polyether polyol are obtained by addition polymerization of an active hydrogen compound and alkylene oxide by a known method. Examples of the active hydrogen compounds are monools such as methanol, ethanol, propanol, butanol, octanol and lauryl alcohol; diols such as ethylene glycol, diethylene glycol, triethylene glycol, propylene glycol, dipropylene glycol, butylene glycol, 1,3-butanediol, 1,4-butanediol and 1,6-hexanediol; polyols such as glycerine, trimethylolpropane and pentaerythritol; and the other alcohols such as monoethanol amine, diethanol amine, triethanol amine, diglycerine, sorbitol and sucrose. These active hydrogen compounds may be used alone or in a mixture of at least two kinds. Examples of the alkylene oxides are ethylene oxide, propylene oxide, butylene oxide and styrene oxide. These alkylene oxides may be used alone or in a mixture of at least two kinds.

Of these polyisocyanate components, polymeric MDI, which has extremely small volatility in the temperature of the handling environment, is liquid and has a structure connected to economic efficiency, and a prepolymer using this are preferable, in view of safety and health and economic efficiency.

The content of isocyanate groups within the polyisocyanate (B1) is preferably 10 to 50 % by weight, more preferably 20 to 35 % by weight. When the content of isocyanate groups is less than 10 % by weight, the strength of the consolidated body tends to decrease, as the crosslinked structure by the silicic acid anhydride-urethane complex reaction and urea bond decreases. When the content is more than 50 % by weight, the consolidated body tends to become fragile, as crosslinking points within the reaction consolidated body increase significantly.

Diluent (B2) is excellent in compatibillity with polyisocyanate (B1) and the effect of reducing the degree of viscosity and must be a diluent excellent in storage stability of component (B). For example, Japanese Patent No. 2591540 discloses as the reactive diluent, diesters dibasic acid of low molecular weight, acetic esters of monool or polyol, alkylene carbonates, ethers, cyclic esters, acid anhydride, various acrylic esters and methacrylic esters. In the present invention, by using diester obtained from dicarboxylic acid and polyether alcohol as diluent (B2) and adjusting the flash point of component (B) to at least 200°C, a chemical grout composition for stabilization excellent in safety in view of the working environment is obtained.

Diluent (B2) may be a diluent that is alkali hydrolyzed by the sodium silicate aqueous solution as the above reactive diluent is or not alkali hydrolyzed and is not particularly limited as long as it is a diester obtained from dicarboxylic acid and polyether alcohol. Particularly, a diluent that is alkali hydrolyzed by the sodium silicate aqueous solution is preferable in view of reactivity with the sodium silicate aqueous solution (A) and polyisocyanate (B1). Here, hydrolysis refers to when the hydrolysis ratio, measured 2 hours after the diluent is mixed with sodium silicate in the presence of an amine catalyst under boiling reflux conditions, is 5 to 100 %. More specifically, hydrolysis refers to when the hydrolysis ratio is 5 to 100 %, measured 2 hours after 15 parts by weight of the diluent is mixed based on 100 parts by weight of sodium silicate No. 1 (solid content: 40 %, ratio of SiO₂/Na₂O: 2.2) under boiling reflux conditions to which 1 % of N,N,N'-trimethyl aminoethyl ethanol amine is added as the amine catalyst.

Furthermore, of the diesters obtained from dicarboxylic acid and polyether alcohol, diester obtained from aliphatic dicarboxylic acid and polyoxyalkylene alkyl ether alcohol is particularly effective.

As the aliphatic dicarboxylic acid, aliphatic dicarboxylic acid having 2 to 12 carbon atoms, more preferably 4 to 8 carbon atoms is used. Examples are aliphatic saturated dicarboxylic acid such as oxalic acid, malonic acid, succinic acid, glutaric acid, adipic acid, pimelic acid, suberic acid, azelaic acid and sebacic acid and aliphatic unsaturated dicarboxylic acid such as maleic acid and fumaric acid.

As the polyoxyalkylene alkyl ether alcohol, those obtained by adding alkylene oxide to aliphatic monoalcohol which is an initiator by a known method may be used. As the aliphatic monoalcohol, monoalcohol having 1 to 24 carbon atoms, more preferably 1 to 8 carbon atoms is used. Examples are alkyl alcohol such as methanol, ethanol, n-propanol, n-butanol, n-amyl alcohol, n-hexanol, n-heptanol, n-octanol, n-nonanol, n-decanol, n-lauryl alcohol, n-tridecanol, n-tetradecanol, n-pentadecanol, n-heptadecanol, n-octadecnol (stearyl alcohol), isopropanol, isobutanol, 2-ethylhexanol, methyl-1-nonanol, dimethyl-1-octanol, tetramethyl-1-hexanol, 3-ethyl-4,5,6-trimethyloctanol, 4,5,6,7-tetramethylnonanol, 2-hexyldodecanol, 2-hexadecyloctanol and a mixture thereof. As the alkylene oxide, alkylene oxide having 2 to 8 carbon atoms, more preferably 2 to 4 carbon atoms is used and examples are ethylene oxide, propylene oxide, butylene oxide and a mixture thereof.

In the present invention, diester obtained from adipic acid and n-butanol to which ethylene oxide is added is particularly preferable, as the viscosity of component (B) is suitably adjusted to improve workability and the improving effect of compatibility of component (A) and component (B) is large.

The flash point of diester obtained from aliphatic dicarboxylic acid and polyoxyalkylene alkyl ether alcohol is preferably at least 70°C, more preferably at least 200°C. When the flash point is lower than 70°C, the flash point of component (B) tends to be lowered to less than 200°C even if the amount of diester added is small.

The number average molecular weight of diester obtained from aliphatic dicarboxylic acid and polyoxyalkylene alkyl ether alcohol is preferably 200 to 2000, more preferably 300 to 600.

By also using propylene carbonate in diluent (B2), the compatibility of component (A) and (B) can be improved further. However, when polymeric MDI is used as polyisocyanate (B1) and propylene carbonate is used together with as diluent (B2), in the case that propylene carbonate is compounded in a large amount, the flash point of component (B) becomes lower than 200°C, as the flash point of propylene carbonate is a low temperature of approximately 130°C. Therefore, in this case, the amount of propylene carbonate which is added must be less than 5 % by weight within component (B).

The amount of diluent (B2) which is added is preferably 0.5 to 80 % by weight, more preferably 1 to 50 % by weight within component (B). When the amount of diluent (B2) is less than 0.5 % by weight, the effects of diluting component (B) and improving compatibility of the mixed solution tend to become insufficient. Also, when the amount is more than 80 % by weight, strength of the consolidated body may not be sufficiently exhibited as the reaction curability of the mixed solution of component (A) and component (B) are poor because little polyisocyanate (B1) is contained within component (B).

Regarding the mixing ratio of component (A) and component (B), preferably 10 to 1000 parts by weight, more preferably 50 to 500 parts by weight of component (B) is added based on 100 parts by weight of component (A). When the amount of component (B) is less than 10 parts by weight, the mixture becomes unstable and tends to become inhomogeneous. Also, when the amount of component (B) is more than 1000 parts by weight, inorganic components within the consolidated body decrease and sufficient flame resistance may not be obtained.

In the present invention, an amine catalyst may be compounded to component (A) and as a result, reaction curing of component (A) and component (B) can be advanced. Examples of the amine catalyst are N,N,N'N'-tetramethylhexamethylenediamine, N,N,N'N'-tetramethylpropylenediamine, N,N,N',N',N"-pentamethyldiethylenetriamine, N,N',N'-trimethylaminoethylpiperazine, N,N,N'N'-tetramethylethylenediamine, bis-(dimethylaminoethyl) ether, N,N',N'-tris(3-dimethylaminopropyl)hexahydro-S-triazine, 2-methyltriethylenediamine, N,N-dimethylaminoethylmorpholine, dimethylaminopropylimidazole, hexamethyltriethylenetetramine, hexamethyltripropylenetetramine, N,N,N-tris(3-dimethylaminopropyl)amine, N-methyl-N,N-bis(3-dimethylaminopropyl)amine, triethylenediamine, N-methylmorpholine, N-methylimidazole, 1,2-dimethylimidazole, N,N-dimethylethanolamine, N,N-dimethylaminoethoxyethanol, N,N-dimethylaminohexanol, N,N,N'-trimethylaminoethylethanolamine and N-methyl-N'-hydroxyethylpiperazine. These may be used alone or in combinations thereof. Of these, N,N-dimethylaminohexanol and N,N,N'-trimethylaminoethylethanolamine which are low in odor and skin irritation are preferable in view of working environment.

The amount added of the amine catalyst is preferably 0.01 to 20 % by weight within component (A). When the amount of the amine catalyst is less than 0.01 % by weight, controlling the foam curing reaction tends to become difficult and when the amount is more than 20 % by weight, costs tend become high economically.

Also, polyol may be compounded in component (A) and as a result, the reaction curability of the mixture can be adjusted. Examples of the polyol are diols such as ethylene glycol, diethylene glycol, triethylene glycol, propylene glycol, dipropylene glycol, butylene glycol, 1,3-butane diol, 1,4-butane diol and 1,6-hexane diol and polyols such as glycerine, trimethylolpropane and pentaerythritol. Further examples include polyetherol obtained by a known method of addition polymerization of monoethanol amine, diethanol amine, triethanol amine, diglycerine, sorbitol, sucrose or a mixture thereof with alkylene oxides such as ethylene oxide, propylene oxide, butylene oxide, styrene oxide or a mixture thereof, polyester polyol and polycarbonate polyol. Of these, ethylene glycol, diethylene glycol, triethylene glycol, propylene glycol, dipropylene glycol, butylene glycol, 1,3-butane diol, 1,4-butanediol, 1,6-hexanediol, glycerine and trimethylolpropane, which are stable in component (A) and have a relatively low molecular weight, are particularly preferable.

The amount added of polyol is preferably 0.1 to 50 % by weight within component (A). When the amount of polyol is less than 0.1 % by weight, the consolidated body tends to become fragile as the crosslinked structure due to urethane bonds decreases. When the amount is more than 50 % by weight, the flame resistance of the consolidated body tends to decrease as the inorganic components within the consolidated body decrease.

Also, a silicone foam stabilizer having dimethylpolysiloxane as the main component may be compounded in component (B). A silicone foam stabilizer, which is stable within component (B) and does not contain active hydrogen groups, is preferable.

The amount added of the silicone foam stabilizer is preferably 0.01 to 5 % by weight within component (B). When the amount of the silicone foam stabilizer is less than 0.01 % by weight, controlling the expansion ratio tends to become difficult as the foam stabilizing effect of the expanded article decreases. When the amount is more than 5 % by weight, costs become high economically and the silicone foam stabilizer tends to become unsuitable for this use.

The chemical grout composition of the present invention comprising component (A) and component (B), which is a special chemical grout, is injected in ground, rock bed or a crushed zone layer that is soft or unstable having a great deal of airspace and cracks, to consolidate, in urethane forepoling construction method or injection long distance pre-supporting construction method (AGF construction method), which are conducted with the purpose of preventing caving of the face and roof and expansion of loosening, when digging tunnels. This method for injecting to consolidate is not particularly limited and a known method may be used. One example is a method of using a comparative compounding-type pump, which can control the injection amount, pressure and compounding ratio of component (A) and component (B). In this method, component (A) and component (B) are placed in separate tanks and perforated rock bolts or injection rods, in which a static mixer or non-return valve fixed in advance are installed, are lead to specified locations (for example a plurality of openings perforated in intervals of approximately 0.5 to 3 m) in the rock bed. Each component within the tanks are then injected thereto at an injection pressure of 0.05 to 5 MPa and a specified amount of component (A) and component (B) are homogeneously mixed via the static mixer. The mixture is then injected and permeated into the specified location of the unstable rock bed or ground and then cured to stabilize by consolidation.

When injecting the composition into the roof of the tunnel, before injecting, holes are dug in specified intervals of approximately 2 m using a 42 mmφ bit leg auger, to create injection holes of a 2 m depth and digging angle of 10 to 30°. A rock bolt made of hollow carbon steel pipe, installed with a static mixer and non-return valve having a perforation depth of 3 m, is inserted into this injection hole and the mouth of the rock bolt is sealed using waste cloth and hard urethane foam resin, in order to prevent reverse flow of the chemical grout. Then, the chemical grout is preferably injected by the above method. The injection process is finished when the injection pressure rises suddenly or when the specified injection amount is increased by approximately 50 %. Usually, 30 to 200 kg of the chemical grout is preferably injected per injection hole.

According to the water stopping construction method for increasing stabilization of the present invention, stabilization and water stopping of unstable rock bed and ground can be conducted over a wide area, as the chemical grout has low viscosity and high permeability to unstable areas, cracks and crushing zones. Also, the method is advantageous in practice, in that the hardened consolidated body which is formed has high strength, durability, excellent adhesion to rock bed and flame resistance and the method is economical.

The present invention is explained in detail based on Examples below, but the present invention is not limited thereto.

### <Preparation of solution A>

The materials are added and mixed as shown in Table 1 to prepare solution A. The materials used for preparing solution A are described below.

### (Sodium silicate aqueous solution)

Sodium Silicate No. 1: SiO₂/Na₂O ratio 2.5 (mole ratio), solid content 37 % by weight
Sodium Silicate No. 2: SiO₂/Na₂O ratio 2.5 (mole ratio), solid content 40 % by weight
Sodium Silicate No. 3: SiO₂/Na₂O ratio 2.2 (mole ratio), solid content 41 % by weight

### (Amine catalyst)

TMAEEA: N,N,N'-trimethylaminoethylethanolamine (polyol)
EG: ethylene glycol

**TABLE 1**

| Solution A No. | A-I | A-II | A-III |
|---|---|---|---|
| Sodium Silicate 1 (parts by weight) | 100 | | |
| Sodium Silicate 2 (parts by weight) | | 100 | |
| Sodium Silicate 3 (parts by weight) | | | 100 |
| TMAEEA (parts by weight) | 1.0 | 2.0 | 0.8 |
| EG (parts by weight) | 2.0 | 1.0 | |

### <Preparation of solution B>

The materials are added and mixed as shown in Table 2 to prepare solution B. The materials used for preparing solution B are described below.

### (Polyisocyanate)

P-MDI-1: PAPI135 (available from Dow Polyurethane Japan Co., Ltd.), NCO content 31.5 % by weight
P-MDI-2: polymeric MDI type prepolymer, NCO content of 27.5 % by weight (prepared by reacting 95 parts by weight of PAPI135 (available from Dow Polyurethane Japan Co., Ltd.) and 5 parts by weight of polyoxyalkylene triol having a number average molecular weight of 1500, obtained by addition polymerization of glycerine with 70 % by weight of propylene oxide and 30 % by weight of ethylene oxide, at 80°C for 3 hours)

### (Diluent)

DBEEA: diester obtained from adipic acid and appendix prepared by adding ethylene oxide to n-butanol, flash point 215°C, number average molecular weight 434
PC: propylene carbonate, flash point 132°C
EGDAC: ethylene glycol diacetate, flash point 96°C

### (Silicone foam stabilizer)

SZ-1642: silicone foam stabilizer available from Nippon Unicar Co., Ltd.

**TABLE 2**

| Solution B No. | B-I | B-II | B-III | B-IV | B-V |
|---|---|---|---|---|---|
| P-MDI-1 (parts by weight) | 100 | | 100 | | 100 |
| P-MDI-2 (parts by weight) | | 100 | | 100 | |
| DBEEA (parts by weight) | 25 | 4.0 | | | |
| PC (parts by weight) | | 3.0 | 10 | | |
| EGDAC (parts by weight) | | | | 10 | |
| SZ-1642 (parts by weight) | 1.0 | 0.1 | 1.0 | 0.5 | 1.0 |
| Flash point (°C) | 208 | 202 | 178 | 150 | 208 |

### EXAMPLES 1 to 3 and COMPARATIVE EXAMPLES 1 to 3

100 g each of solution A and solution B set to a temperature of 20°C were weighed and added to a 1 L polycup, in the combinations shown in Table 3. Then, the mixture was mixed and stirred with a mixer at a rate of 500 RPM for 10 seconds. The following evaluations of the properties were conducted. The results are shown in Table 3. In Comparative Example 3, a 3 times expanded test specimen could not be molded, as the expansion ratio was low and the compressive strength could not be measured.
(1) Inflammability of solution B: Solution B having a flash point (Cleveland Open Cup method) of at least 200°C (classified as Class 4 Petroleum of Hazardous Material Class 4 regulated under Fire Defense Law) was evaluated as ○ and solution B having a flash point of at least 70°C and less than 200°C (classified as Class 3 Petroleum of Hazardous Material Class 4 regulated under Fire Defense Law) was evaluated as ×.
(2) Compatibility of mixed solution: The solution obtained by mixing solution A and solution B by the above method was visually observed. The solution which was homogeneously mixed and provided a homogeneous reaction consolidated body was evaluated as ○ and the solution which was inhomogeneous and provided an irregular reaction consolidated body was evaluated as ×.
(3) Expansion ratio: The volume of the expanded article after reaction curing when mixing was conducted by the above method was read from the scale on the polycup and then divided by the volume of the solution before reaction curing to obtain the expansion ratio.
(4) Curing time: The time for reaction curing of the mixed solution mixed by the above method was measured with a stopwatch.
(5) Compression strength: A cylindrical mold of 5 cm in diameter and 10 cm in height was filled with approximately 90 g of a mixed solution mixed by the above method and a approximately 3 times expanded consolidated body was molded by compressing by covering with a lid to prevent leakage of the contents. The uniaxial compressive strength of the test specimen obtained after leaving at room temperature for 24 hours was measured according to JIS K 7220 (method for compression test of hard foam plastic).
(6) Overall evaluation: In the evaluation of (1) to (5), the cases having at least one × were evaluated as × and the cases which did not were evaluated as ○.

**TABLE 3**

| | Ex. | | | Com. Ex. | | |
|---|---|---|---|---|---|---|
| | 1 | 2 | 3 | 1 | 2 | 3 |
| Solution A | A-I | A-II | A-III | A-I | A-II | A-III |
| Solution B | B-I | B-II | B-II | B-III | B-IV | B-V |
| (1) Inflammability of Solution B | ○ | ○ | ○ | × | × | ○ |
| (2) Compatibility of Mixed Solution | ○ | ○ | ○ | ○ | ○ | × |
| (3) Expansion Ratio | 6 | 7 | 5 | 5 | 4 | 1.5 |
| (Times) | | | | | | |
| (4) Curing Time | 72 | 55 | 105 | 74 | 37 | 168 |
| (Seconds) | | | | | | |
| (5) Compression Strength (MPa) | 3.1 | 4.1 | 2.7 | 2.9 | 3.6 | 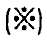 |
| (6) Overall Evaluation | ○ | ○ | ○ | × | × | × |

| | | | | | | |
|---|---|---|---|---|---|---|
| 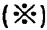 A 3 times expanded test specimen could not be molded as the expansion ratio was low, so strength could not be measured. | | | | | | |

According to the present invention, in a chemical grout composition for stabilization when digging tunnels comprising (A) a sodium silicate aqueous solution and (B) a polyisocyanate composition containing (B1) polyisocyanate and (B2) a diluent, by using diester obtained from dicarboxylic acid and polyether alcohol as the diluent (B2), compatibility of component (A) and component (B), reactivity and properties of the consolidated body can be improved.

Also, by setting the flash point of component (B) to at least 200°C, the composition can be handled safely in the working environment and in terms of transportation and storage quantity.

## Claims

1. A chemical grout composition for stabilization when digging a tunnel comprising:
(A) a sodium silicate aqueous solution and
(B) a polyisocyanate composition comprising (B1) polyisocyanate and (B2) a diluent;
wherein said diluent (B2) comprises diester obtained from dicarboxylic acid and polyether alcohol.

2. The chemical grout composition for stabilization of Claim 1, wherein said diluent (B2) comprises diester obtained from aliphatic dicarboxylic acid and polyoxyalkylene alkyl ether alcohol.

3. The chemical grout composition for stabilization of Claim 1, wherein said diluent (B2) comprises diester, obtained from aliphatic dicarboxylic acid and polyoxyalkylene alkyl ether alcohol, and propylene carbonate.

4. The chemical grout composition for stabilization of Claim 1, 2 or 3, wherein the flash point of said polyisocyanate composition (B) is at least 200°C.

5. The chemical grout composition for stabilization of Claim 1, 2, 3 or 4, wherein said sodium silicate aqueous solution (A) contains an amine catalyst.

6. The chemical grout composition for stabilization of Claim 1 2, 3 or 4, wherein said sodium silicate aqueous solution (A) contains polyol.

7. The chemical grout composition for stabilization of Claim 1 2, 3, 4, 5 or 6, wherein said polyisocyanate (B1) comprises a urethane prepolymer containing an isocyanate group at a terminal obtained by reacting polyisocyanate and polyol.

8. The chemical grout composition for stabilization of Claim 1, 2, 3, 4, 5, 6 or 7 wherein said polyisocyanate composition (B) contains a silicone foam stabilizer.

9. A construction method for increasing stability when digging a tunnel in a mountain tunnel construction method, which comprises injecting the chemical grout composition of any of Claims 1 to 8 in rock bed or ground to consolidate, by urethane injection forepoling construction method and/or injection long distance pre-supporting construction method.

## Patentansprüche

1. Chemische Mörtelzusammensetzung zur Stabilisierung beim Graben eines Tunnels, umfassend:
(A) eine wässrige Natriumsilikatlösung und
(B) eine Polyisocyanatzusammensetzung, die (B1) Polyisocyanat und (B2) ein Verdünnungsmittel aufweist;
wobei das Verdünnungsmittel (B2) Diester aufweist, die von Dicarboxylsäure und Polyetheralkohol erhalten werden.

2. Chemische Mörtelzusammensetzung zur Stabilisierung von Anspruch 1, bei der das Verdünnungsmittel (B2) Diester enthält, die von aliphatischer Dicarboxylsäure und Polyoxyalkylenalkyl-Etheralkohol erhalten werden.

3. Chemische Mörtelzusammensetzung zur Stabilisierung von Anspruch 1, bei der das Verdünnungsmittel (B2) Diester enthält, die von aliphatischer Dicarboxylsäure und Polyoxyalkylenalkyl-Etheralkohol und Propylencarbonat erhalten werden.

4. Chemische Mörtelzusammensetzung zur Stabilisierung von Anspruch 1, 2 oder 3, bei der der Entzündungspunkt der Polyisocyanatzusammensetzung (B) mindestens 200°C beträgt.

5. Chemische Mörtelzusammensetzung zur Stabilisierung von Anspruch 1, 2, 3 oder 4, bei der die wässrige Natriumsilikatlösung (A) einen Aminkatalysator enthält.

6. Chemische Mörtelzusammensetzung zur Stabilisierung von Anspruch 1, 2, 3 oder 4, bei der die wässrige Natriumsilikatlösung (A) Polyol enthält.

7. Chemische Mörtelzusammensetzung zur Stabilisierung von Anspruch 1, 2, 3, 4, 5 oder 6, bei der das Polyisocyanat (B1) ein Urethanvorpolymer aufweist, das eine Isocyanatgruppe an einer Endstelle enthält, die erhalten wird, indem Polyisocyanat und Polyol zur Reaktion gebracht werden.

8. Chemische Mörtelzusammensetzung zur Stabilisierung von Anspruch 1, 2, 3, 4, 5, 6 oder 7, bei der die Polyisocyanatzusammensetzung (B) einen Silikonschaumstabilisator enthält.

9. Bauverfahren zum Erhöhen der Stabilität beim Graben eines Tunnels in einem Bergtunnelbauverfahren, welches umfasst, die chemische Mörtelzusammensetzung von einem der Ansprüche 1 bis 8 in Gesteinsbett oder Boden zum Verfestigen durch ein Urethanspritzvortrieb-Bauverfahren und/oder großflächiges abstützendes Spritz-Bauverfahren einzuspritzen.

## Revendications

1. Composition de coulis de stabilisation de tunnels pendant leur creusement comprenant :
(A) une solution aqueuse de silicate de sodium et
(B) une composition de polyisocyanate comprenant (B1) du polyisocyanate et (B2) un diluant,
dans laquelle ledit diluant (B2) comprend un diester obtenu à partir de l'acide dicarboxylique et d'un alcool de polyéther.

2. Composition de coulis de stabilisation selon la revendication 1, dans laquelle ledit diluant (B2) comprend un diester obtenu à partir de l'acide dicarboxylique aliphatique et d'un alcool d'éther polyoxyalcylène alkylé.

3. Composition de coulis de stabilisation selon la revendication 1, dans laquelle ledit diluant (B2) comprend un diester obtenu à partir de l'acide dicarboxylique aliphatique et d'un alcool d'éther polyoxyalcylène alkylé et de carbonate de propylène.

4. Composition de coulis de stabilisation selon l'une des revendications 1 à 3, dans laquelle le point d'éclair de ladite composition de polyisocyanate (B) est d'au minimum 200°C.

5. Composition de coulis de stabilisation selon l'une des revendications 1 à 4, dans laquelle ladite solution de silicate de sodium (A) contient un catalyseur aminé.

6. Composition de coulis de stabilisation selon l'une des revendications 1 à 4, dans laquelle ladite solution aqueuse de silicate de sodium (A) contient du polyalcool.

7. Composition de coulis de stabilisation selon l'une des revendications 1 à 6, dans laquelle ledit polyisocyanate (B1) comprend un prépolymère uréthane contenant un groupe isocyanate en fin de chaîne obtenu par réaction du polyisocyanate avec du polyalcool.

8. Composition de coulis de stabilisation selon l'une des revendications 1 à 7, dans laquelle ladite composition avec du polyisocyanate (B) contient de la mousse de silicone comme stabilisateur.

9. Procédé pour augmenter la stabilité lors du creusement de tunnels selon une méthode de construction de tunnels de montagnes, qui comprend l'injection de la composition de coulis selon l'une quelconque des revendications 1 à 8 dans le banc ou le fond rocheux à consolider, lors de l'utilisation d'une méthode de construction par soutènement en port à faux en voie par injection d'uréthane et/ou d'une méthode de construction par soutènement préalable par injection à longue distance.
